# EUROPEAN PATENT APPLICATION

(11) **EP 4 748 811 A1**
(43) Date of publication of application: **27.05.2026**
(21) Application number: 24215600.8
(22) Date of filing: 26.11.2024
(51) Int. Cl.: C04B 28/04, C04B 28/14, C04B 28/16, C04B 103/14

(54) **ACTIVATORS FOR BLENDED CEMENTS**

(71) Applicant: Sika Technology AG, 6340 Baar (CH)
(72) Inventor: CHITSA, Collins, AL7 1BQ Welwyn Garden City (GB); HINCHCLIFFE, Peter, AL7 1BQ Welwyn Garden City (GB); LISKA, Martin, AL7 1BQ Welwyn Garden City (GB); EVANS, Craig Edwards, LS9 0SW Leeds (GB)
(74) Representative: Sika Patent Attorneys

(57) **Abstract**

The present invention relates to activators for blended cements comprising at least one source of calcium sulfate, hydrated lime, and calcium aluminate, and cementitious compositions comprising the same. The present invention also relates to methods to increase the mechanical strength of cementitious compositions comprising blended cements by intermixing or intergrinding an activator comprising at least one source of calcium sulfate, hydrated lime, and calcium aluminate.

## Description

### Technical Field

The present invention relates to activators for blended cements and cementitious compositions comprising the same. The present invention also relates to methods to increase the mechanical strength of cementitious compositions comprising blended cements.

### Background of the invention

Many building materials, especially concrete and mortars, rely on hydraulic binders. The most abundant hydraulic binders are cements and especially Ordinary Portland Cement (OPC). However, the use of cements and especially of Ordinary Portland Cement has a negative environmental impact. One major reason are the high CO₂ emissions associated with the manufacture of cements. Many efforts have thus been made to at least partially replace cements as binders from building materials.

One possibility is the use of blended cements. Thereby, Portland clinker is mixed with supplementary cementitious materials such as pozzolans and/or latent hydraulic materials, as cement replacement. An especially appealing supplementary cementitious material is slag as it is available as a by-product of various metallurgical process, especially iron and steelmaking, in large quantities.

One specific type of slag is ground granulated blast furnace slag (GGBS). GGBS is obtained by quenching molten iron slag from a blast furnace in water or steam, to produce a glassy, granular product that is then dried and ground into a fine powder. It is known that GGBS can be used to manufacture blended cements.

However, especially at higher levels of supplementary cementitious materials in blended cements, for example levels exceeding 70 w% of even exceeding 90 w%, a delayed set, delayed strength development, and lower late strength is often observed when hardening such blended cements for example as part of a concrete formulation. Thus, activation is needed, especially at high levels of supplementary cementitious materials such as GGBS in blended cements.

WO 2022/122343 (Holcim Technology) discloses activators for super sulfated cement which is not activated by Portland cement. Super sulfated cement according to WO 2022/122343 mainly consists of granulated blast furnace slag and calcium sulfate and is activated by a mixture of calcium sulfoaluminate or calcium aluminate with calcium hydroxide in specific amounts. Supersulfated cement of WO 2022/122343 is free from Portland clinker.

It would be desirable to have available activators suitable to activate blended cements which comprise Portland clinker and a high amount of supplementary cementitious materials. Such activation would lead to an increased strength of hardened cementitious compositions comprising blended cements.

### Summary of the invention

It is an object of the present invention to provide activators for blended cements. It is another object of the present invention to provide methods for the increase of mechanical strength of blended cements or of cementitious compositions comprising the same. It is another object of the present invention to provide blended cements or cementitious compositions comprising the same and having increased mechanical strength. In particular, blended cements are cements comprising Portland clinker, especially not more than 30 w% of Portland clinker, and supplementary cementitious material, especially not less than 70 w% of supplementary cementitious material. An increased mechanical strength especially relates to an increase in compressive strength obtained after not less than 7 days of curing of the blended cement and activator or cementitious composition comprising the same.

It has surprisingly been found that an activator as claimed in claim 1 can solve the objective of the present invention.

It has been found that an activator comprising at least one source of calcium sulfate, hydrated lime, and calcium aluminate is suitable to increase the mechanical strength of blended cements or cementitious compositions comprising blended cements.

Without wishing to be bound by theory it is believed that activators of the present invention are active in the formation and precipitation of ettringite. Ettringite formed may act as nucleating site for further formation and growth of ettringite, thereby contributing to the strength of the curing composition. Ettringite may also act by filling the porosities of the curing composition.

Further aspects of the invention are the subject matter of independent claims.

Preferred embodiments are the subject matter of dependent claims.

### Detailed Ways

In a first aspect the present invention relates to an activator for blended cement, said activator comprising, in each case relative to the total dry weight of the activator,
a) 20 - 75 w%, preferably 40 - 60 w% of at least one source of calcium sulfate,
b) 15 - 50 w%, preferably 36 - 45 w% of hydrated lime,
c) 1-40 w%, preferably 3-8 w% of calcium aluminate, and
d) optionally an inert filler.

Activation within the present context relates to an increase of the reaction rate of supplementary cementitious materials and/or Portland clinker with water. This reaction is called hydration or hydraulic reaction. During hydration, especially, aluminate and/or silicate phases of the supplementary cementitious material are dissolved in water, react, and precipitate in the form of solid hydrates. One example of a precipitated hydrate phase is ettringite. In particular, an activator of the present invention activates the hydration reaction of supplementary cementitious materials which otherwise show no or lower reactivity. Mechanical strength develops as hydration proceeds. Therefore, an activator within the present context is a material that leads to an increase of mechanical strength, especially of compressive strength, of a composition comprising blended cement. The compressive strength can in particular be measured according to standard EN 12390-3:2019.

It is preferred that an activator of the present invention is in the form of a finely divided powder.

In particular the particle size D50 measured by laser diffraction according to standard ISO 13320:2020 of the at least one source of calcium sulfate, the hydrated lime, and the calcium aluminate is between 1 - 100 microns, preferably between 2-50 microns, more preferably between 5-15 microns. The particle size D50 relates to the average particle size. Therefore, preferably, the activator of the present invention is in the form of a dry powder and has a particle size D50 measured by laser diffraction according to standard ISO 13320:2020 of between 1 - 100 microns, preferably between 2-50 microns, more preferably between 5-15 microns. Further preferably, the particle size D90 is not higher than 1000 microns, preferably not higher than 100 microns, especially is between 20 - 50 microns. The particle size D90 is the particle size in the particle size distribution curve where 90% of all particles have a lower particle size.

Within the present context, blended cements are cements comprising Portland clinker and at least one supplementary cementitious material. Supplementary cementitious materials preferably are selected from pozzolans and/or latent hydraulic materials. According to embodiments, a blended cement of the present invention comprises Portland clinker and at least one supplementary cementitious material selected from the group consisting of fly ash; silica fume; calcined clays, preferably metakaolin; natural pozzolans such as volcanic ashes; rice husk ash; ironmaking or steelmaking slags, preferably ground granulated blast furnace slag, basic oxygen furnace slag, or ladle slag; burnt oil shale, and municipal waste incineration ashes. A very preferred type of supplementary cementitious material within the present context is ground granulated blast furnace slag, basic oxygen furnace slag, or ladle slag. The amount of supplementary cementitious material in a blended cement of the present invention may vary in wide ranges but preferably are comprised in high amounts. It is preferred that not more than 30 w% Portland clinker, preferably between 6 - 10 w% Portland clinker, and not less than 70 w% of at least one supplementary cementitious material, preferably between 90 - 94 w% of at least one supplementary cementitious material, in each case relative to the total dry weight of the blended cement, are present.

According to embodiments, the at least one source of calcium sulfate is selected from the group consisting of anhydrite, calcium sulfate hemihydrate, calcium sulfate dihydrate, plaster, natural gypsum, REA gypsum, and phosphogypsum, preferably calcium sulfate hemihydrate. Calcium sulfate hemihydrate relates to α- and β-hemihydrate which can be used individually or in combination. Preferably, the at least one source of calcium sulfate does not comprise any other sources of calcium sulfate.

The term "calcium aluminate" refers to a material which comprises or consists of crystalline calcium aluminate phase such as C3A, C2A, C12A7, CA, CA2, and/or calcium aluminosilicate phases such as C2AS. Thereby, C stands for CaO, A stands for Al₂O₃, and S stands for SiO₂. The phase CA therefore has the empirical formula CaAl₂O₄. Other phases such as perovskite, belite (C2S), tricalcium silicate (C3S), ternesite, ye'elemite (C4A3$, with $ = SOs), or ferrites may additionally be present. Amorphous phases may additionally be present. Calcium aluminate of the present invention typically also comprises amorphous phases. Amorphous phases can also have activating properties within the present context. The phase composition of a calcium aluminate material can be determined by XRD analysis.

For example, a calcium aluminate of the present invention may comprise 32 w% of CA, 11 w% of C12A7, and 26 w% of C2S. For example, a calcium aluminate of the present invention may comprise 80 w% or more of CA2 and C2AS. For example, a calcium aluminate of the present invention may comprise 50 w% or more, preferably 75 w% or more, still more preferably 95 w% or more, in particular 100 w% C12A7. For example, a calcium aluminate of the present invention may comprise 50 - 60 w% of CA2, 26 - 32 w% of C2AS, 2 - 4 w% of CA.

According to preferred embodiments, an activator of the present invention comprises calcium aluminate selected from materials comprising at least one crystalline phase selected from C3A, C2A, C12A7, CA, CA2, and C2AS, preferably in an amount of at least 30 w%, more preferably at least 50 w%, relative to the total weight of the calcium aluminate.

Preferably, the amount of amorphous phases in the calcium aluminate is not more than 60 w%, preferably not more than 20 w%, relative to the total weight of the calcium aluminate

It can be preferred that the calcium aluminate comprises from 20 to 60 w%, preferably 30 to 55 w% of C, from 19 to 80 w%, preferably from 20 to 40 w% of A, from 0 to 20 w%, optionally from 5 to 30 w% of S, from 0 to 15 w% of iron oxides, and from 0 to 5 w% of titanium oxides.

According to embodiments, the molar ratio C / (A+S) in the calcium aluminate of the present invention is in the range from 0.5 to 3.0, preferably from 1.0 to 2.7, more preferably from 1.5 to 1.8. Thereby, (A+S) is the sum of Al₂O₃ and SiO₂.

An inert filler is optionally present. Inert fillers are materials that are not reactive in hydraulic reactions. Examples of inert fillers are quartz sands or silica sands and calcium carbonates. A particularly preferred inert filler is silica sand. The addition of an inert filler can facilitate the dosage of the other components of the activator relative to the blended cement. This is particularly the case where low dosages of the at least one source of calcium sulfate, hydrated lime, and calcium aluminate relative to the blended cement are required.

In another aspect the present invention relates to a method to increase the mechanical strength, in particular the late mechanical strength, of a cementitious composition comprising a blended cement, said method comprising the steps of
(i) providing a cementitious composition comprising a blended cement,
(ii) providing an activator comprising or consisting of at least one source of calcium sulfate, hydrated lime, calcium aluminate, and optionally an inert filler, and
(iii) intermixing or intergrinding the cementitious composition and the activator.

All features and embodiments as described above also relate to this aspect.

In particular in a method of the present invention the blended cement comprises Portland clinker and at least one supplementary cementitious material selected from the group consisting of fly ash; silica fume; calcined clays, preferably metakaolin; natural pozzolans such as volcanic ashes; rice husk ash; ironmaking or steelmaking slags, preferably ground granulated blast furnace slag, basic oxygen furnace slag, or ladle slag; burnt oil shale, and municipal waste incineration ashes, preferably ground granulated blast furnace slag, basic oxygen furnace slag, or ladle slag.

Preferably, in a method of the present invention the blended cement comprises not more than 30 w% Portland clinker, preferably between 6 - 10 w% Portland clinker, and not less than 70 w% of at least one supplementary cementitious material, preferably between 90 - 94 w% of at least one supplementary cementitious material, in each case relative to the total dry weight of the blended cement.

A cementitious composition within the present context is a composition comprising a blended cement. A cementitious composition may also consist of the blended cement. In other words, the blended cement itself can be a cementitious composition.

In addition to the blended cement, a cementitious composition may additionally comprise aggregates, fillers, admixtures different from the activator of the present invention, and optionally water.

Aggregates can be any aggregate typically used for construction materials. Typical aggregates are for example rock, crushed stone, crushed concrete, gravel, sand, especially quartz sand, river sand and/or manufactured sand, glass, expanded glass, hollow glass beads, glass ceramics, quarry wastes, porcelain, electro fused or sintered abrasives, firing support, silica xerogels bio sourced aggregates such as hemp or sunflower. An especially preferred aggregate is sand. Suitable sands are for example described in standards ASTM C778 or EN 196-1.

Fillers are characterized by a small particle size, typically with a particle size determined by sieve analysis of below 0.063 mm. Especially, fillers are selected from fine calcium carbonate, ground limestone, ground dolomite, and/or ground aluminum oxide, and/or non-reactive slags. Non-reactive means that slags useful as fillers do not react with water in hydration reactions.

It is possible to use more than one aggregate and more than one filler also in combination.

Admixtures must be chemically different from the activator of the present invention. Admixtures can be selected from the list consisting of plasticizers, superplasticizers, shrinkage reducers, air entrainers, de-aerating agents, stabilizers, viscosity modifiers, thickeners, water reducers, retarders, water resisting agents, hydrophobic agents, fibers, blowing agents, defoamers, redispersible polymer, dedusting agents, chromate reducers, pigments, biocides, corrosion inhibitors, and steel passivating agents.

Preferred cementitious compositions of the present invention are blended cements, concrete, mortars, and grouts.

The mechanical strength, in particular the late mechanical strength, especially is the compressive strength. In particular, the late mechanical strength of a cementitious composition is increased by a method of the present invention. The late mechanical strength refers to the mechanical strength, in particular the compressive strength, obtained after not less than 7 days, for example after 7 days, 28 days, 56 days, or 90 days, of curing of the cementitious composition.

The expression "increase the mechanical strength" means that the mechanical strength, especially the compressive strength, of a cementitious composition obtained by a method of the present invention is increased after a given time of curing as compared to the mechanical strength of the same cementitious composition without the activator intermixed or interground and cured for the same time and under the same conditions.

Curing of a cementitious composition starts with the addition of water. Within the present context, curing is understood to proceed at ambient pressure of about 1013 mbar and temperatures between 5 - 50 °C. Curing involves the hydration of the blended cement.

It is possible that the cementitious composition comprises water. It is also possible that a method of the present invention comprises an additional step of adding water to the cementitious composition. In case the activator is intermixed with the cementitious composition, water can be added together with the activator or after the addition of activator. Intermixing of activator after addition of water is only possible within a short time, for example less than 5 minutes. In case the activator is interground with the cementitious composition, water preferably is added after the grinding step.

According to embodiments, in a method of the present invention, the cementitious composition comprises water in a weight ratio of water to blended cement of equal to or lower than 0.4, preferably equal to or lower than 0.38, especially between 0.35 - 0.4.

According to embodiments, a method of the present invention comprises an additional step of adding water in a weight ratio of water to blended cement of equal to or lower than 0.4, preferably equal to or lower than 0.35, especially between 0.35 - 0.4.

It is preferred that in a method of the present invention the activator comprises, in each case relative to the total dry weight of activator,
a) 20 - 75 w%, preferably 40 - 60 w% of at least one source of calcium sulfate,
b) 15 - 50 w%, preferably 36 - 45 w% of hydrated lime,
c) 1-40 w%, preferably 3-8 w% of calcium aluminate, and
d) optionally an inert filler.

All components preferably are as described above.

The term "intermixing" stands for a process where the construction composition and the activator are intimately mixed with each other. Intermixing is not particularly limited. Methods and means for intermixing of solids and liquids are known to the skilled person per se. For example, the construction composition or any part thereof can be mixed in dry form with the activator. It is also possible to dissolve or disperse the activator in water, for example the mixing water, and then intermix the solution or dispersion with the construction composition.

Suitable mixing aggregates include, but are not limited to hand-held agitators, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, vertical agitated chambers or air agitated operations. Intermixing can be continuously, semi-continuously or batch-wise.

The term "intergrinding" stands for a process where the activator is co-milled with the construction composition. Especially, during intergrinding at least one component of the blended cement is co-milled with the activator. The activator is added to the construction composition or the at least one component of the blended cement before and/or during the grinding thereof.

Intergrinding can be done in attrition mills. Especially suitable attrition mills are semi-autogenous mills and compressive grinders. A compressive grinder within the present context is a type of grinder able to exert a compressive force on a bed of material to be ground. Preferably, the compressive force is exerted by rotating cylinders or a rotor-stator. A compressive grinder can for example be a crusher or a roller mill. According to embodiments, the compressive grinder is a vertical roller mill, a horizontal roller mill, or jar crusher with controllable, adjustable compression. According to embodiments, in a method of the present invention, the intergrinding is done in a vertical roller mill or a horizontal roller mill. A semi-autogenous mill is for example a ball mill or an agitation mill. According to embodiments, in a method of the present invention, the intergrinding is done in a ball mill or in an agitation mill.

According to embodiments, the amount of activator intermixed or interground with the cementitious composition in a method of the present invention is between 1 - 10 w%, preferably 2.5 - 7.5 w%, especially 2.5 - 5 w%, relative to the total dry weigh of blended cement.

The present invention also relates to a cementitious composition obtained by a method as described above. In particular, the cementitious composition is a blended cement, concrete, a mortar, or a grout.

In a last aspect, the present invention also relates to the use of a cementitious composition obtained in a method of the present invention for the manufacture of a concrete, a tile adhesive, a grouting mortar, a repair mortar, a masonry mortar, a waterproofing mortar, an anchoring mortar, a render, a screed, a thin joint mortar, a self-levelling underlayment or self-levelling overlayment, or a levelling compound.

### Examples

### Example 1

In a first set of experiments the amounts of calcium sulfate, hydrated lime, and calcium aluminate in an activator were varied.

Activators having the composition as shown in below table 1 were used. The respective activators were mixed with a blended cement consisting of 10 w% Ordinary Portland cement (CEM I according to standard EN 197-1) and 90 w% ground granulated blast furnace slag (Purfleet from Hanson Cement, UK). The amount of activator added was 1 w% relative to the blended cement. Water was added to the dry mix in a weight ratio of water to blended cement (w/c) of 0.4 together with sufficient superplasticizer based on polycarboxylate ether to achieve a slump flow of 200 mm according to standard EN 12350-2. Mixing was continued for 3 minutes with a Megamixer, followed by 30 seconds intensive mixing by hand. Compressive strength (C.S.) was measured according to standard EN 12390-3:2019 after the time indicated in below table 1. Results are normalized to 100 for Reference 1 and are shown in below table 1.

**Table 1: Examples E1 - E4 (inventive) and references R1 - R4 (not inventive). W% are given relative to the total weight of activator.**

| **Example** | **R1** | **E1** | **E2** | **E3** | **R2** | **E4** | **R3** | **R4** |
|---|---|---|---|---|---|---|---|---|
| Calcium sulfate* [w%] | 55 | 55 | 60 | 20 | 5 | 35 | 35 | 60 |
| Hydrated Lime [w%] | 5 | 40 | 35 | 40 | 35 | 40 | 5 | 5 |
| Calcium aluminate** [w%] | 40 | 5 | 5 | 40 | 40 | 5 | 40 | 15 |
| Filler | | | | | 20 | 20 | 20 | 20 |
| | | | | | | | | |
| C.S. 7d | 100 | 111 | 111 | 107 | 78 | 100 | 93 | 93 |
| C.S. 28d | 100 | 117 | 111 | 106 | 83 | 106 | 89 | 83 |

| | | | | | | | | |
|---|---|---|---|---|---|---|---|---|
| * calcium sulfate hemihydrate ** 80 w% C12A7, 20 w% amorphous phases | | | | | | | | |

It can be seen from the results shown in table 1 that accelerators according to the invention increase the mechanical strength, especially the late mechanical strength.

### Example 2

In a second set of experiments, the composition of activator was fixed to 55 w% of calcium sulfate hemihydrate, 40 w% of hydrated lime, and 5 w% of calcium aluminate. In a first set of experiments (R5, E5 - E8) the activator dosage was varied as shown in below table 2. In a second set of experiments (E9 - E11) the water to blended cement weight ratio was varied as shown in below table 2. In a third set of experiments (R6, E12) the composition of blended cement was varied as shown in below table 2.

Mixing and testing were caried out as described in example 1. Results are normalized to 100 for Reference 5 and Examples E5 - E11, and are normalized to 100 for Reference 6 and Examples E12 - E14, and are shown in below table 2.

**Table 2: Examples E5 - E12 (inventive) and references R5 - R6 (not inventive). W% are given relative to the total weight of blended cement.**

| **Example** | **R5** | **E5** | **E6** | **E7** | **E8** | **E9** | **E10** | **E11** | **R6** | **E12** | **E13** |
|---|---|---|---|---|---|---|---|---|---|---|---|
| OPC [w%] | 10 | 10 | 10 | 10 | 10 | 10 | 10 | 10 | 20 | 20 | 20 |
| GGBS [w%] | 90 | 90 | 90 | 90 | 90 | 90 | 90 | 90 | 80 | 80 | 80 |
| Activator [w%] | 0 | 2.5 | 5.0 | 7.5 | 10.0 | 5.0 | 5.0 | 5.0 | 0 | 2 | 4 |
| w/c | 0.4 | 0.4 | 0.4 | 0.4 | 0.4 | 0.45 | 0.35 | 0.38 | 0.5 | 0.5 | 0.5 |
| | | | | | | | | | | | |
| C.S. 24 h | 100 | 161 | 162 | 143 | 127 | 92 | 114 | 103 | 100 | 62 | 78 |
| C.S. 7d | 100 | 169 | 176 | 183 | 189 | 133 | 209 | 216 | 100 | 138 | 128 |
| C.S. 28d | 100 | 166 | 177 | 184 | 188 | 179 | 196 | 202 | 100 | 154 | 134 |
| C.S. 56d | 100 | 168 | 174 | 180 | 181 | n.d. | n.d. | n.d. | 100 | 148 | 120 |

| | | | | | | | | | | | |
|---|---|---|---|---|---|---|---|---|---|---|---|
| n.d.: not determined | | | | | | | | | | | |

It can be seen from the results in table 2 that the compressive strength increases at all ages up to a dosage of 5 w%. At dosages of 7.5 w% and higher, the compressive strength at early age (24 hours) decreases again. When adding more than 7.5 w% of activator, the additional increase at later stage becomes smaller. It can further be seen that an optimal late compressive strength can be obtained by reducing the weight ratio of water to blended cement. Finally, it can be seen that at a lower ratio of ground granulated blast furnace slag in the blended cement the activation still works, but to a lesser extent as compared to higher dosages of ground granulated blast furnace slag.

## Claims

1. An activator for blended cement, said activator comprising, in each case relative to the total dry weight of the activator,
a) 20 - 75 w%, preferably 40 - 60 w% of at least one source of calcium sulfate,
b) 15 - 50 w%, preferably 36 - 45 w% of hydrated lime,
c) 1-40 w%, preferably 3-8 w% of calcium aluminate, and
d) optionally an inert filler.

2. The activator as claimed in claim 1, **characterized in that** the particle size D50 measured by laser diffraction according to standard ISO 13320:2020 of the at least one source of calcium sulfate, the hydrated lime, and the calcium aluminate is between 1 - 100 microns, preferably between 2-50 microns, more preferably between 5-15 microns.

3. The activator as claimed in any of the previous claims, **characterized in that** the at least one source of calcium sulfate is selected from the group consisting of anhydrite, calcium sulfate hemihydrate, calcium sulfate dihydrate, plaster, natural gypsum, REA gypsum, and phosphogypsum, preferably calcium sulfate hemihydrate.

4. The activator as claimed in any of the previous claims, **characterized in that** the molar ratio C / (A+S) in the calcium aluminate is in the range from 0.5 to 3.0, preferably from 1.0 to 2.7, more preferably from 1.5 to 1.8.

5. The activator as claimed in any of the previous claims, **characterized in that** the calcium aluminate is selected from materials comprising at least one crystalline phase selected from C3A, C2A, C12A7, CA, CA2, and C2AS, preferably in an amount of at least 30 w%, more preferably at least 50 w%, relative to the total weight of the calcium aluminate.

6. The activator as claimed in any of the previous claims, **characterized in that** the calcium aluminate is selected from materials comprising amorphous phases in an amount of not more than 60 w%, preferably not more than 20 w%, relative to the total weight of the calcium aluminate.

7. A method to increase the mechanical strength, in particular the late mechanical strength, of a cementitious composition comprising a blended cement, said method comprising the steps of
(i) providing a cementitious composition comprising a blended cement,
(ii) providing an activator comprising or consisting of at least one source of calcium sulfate, hydrated lime, calcium aluminate, and optionally an inert filler, and
(iii) intermixing or intergrinding the cementitious composition and the activator.

8. The method as claimed in claim 7, **characterized in that** the blended cement comprises Portland clinker and at least one supplementary cementitious material selected from the group consisting of fly ash; silica fume; calcined clays, preferably metakaolin; natural pozzolans such as volcanic ashes; rice husk ash; ironmaking or steelmaking slags, preferably ground granulated blast furnace slag, basic oxygen furnace slag, or ladle slag; burnt oil shale, and municipal waste incineration ashes, preferably ground granulated blast furnace slag, basic oxygen furnace slag, or ladle slag.

9. The method as claimed in any of claims 7-8, **characterized in that** the blended cement comprises not more than 30 w% Portland clinker, preferably between 6 - 10 w% Portland clinker, and not less than 70 w% of at least one supplementary cementitious material, preferably between 90 - 94 w% of at least one supplementary cementitious material, in each case relative to the total dry weight of the blended cement.

10. The method as claimed in any of claims 7-9, **characterized in that** the cementitious composition comprises water in a weight ratio of water to blended cement of equal to or lower than 0.4, preferably equal to or lower than 0.38, especially between 0.35 - 0.4.

11. The method as claimed in any of claims 7 - 10, **characterized in that** the activator comprises, in each case relative to the total dry weight of activator,
a) 20 - 75 w%, preferably 40 - 60 w% of at least one source of calcium sulfate,
b) 15 - 50 w%, preferably 35 - 45 w% of hydrated lime,
c) 1-40 w%, preferably 3-8 w% of calcium aluminate, and
d) optionally an inert filler.

12. The method as claimed in any of claims 7 - 11, **characterized in that** the activator is intermixed or interground with the cementitious composition in an amount of 1 - 10 w%, preferably 2.5 - 7.5 w%, especially 2.5 - 5 w%, relative to the total dry weigh of blended cement.

13. A cementitious composition obtained by a method as claimed in any of claims 7 -12.

14. Use of a cementitious composition as claimed in claim 13 for the manufacture of a concrete, a tile adhesive, a grouting mortar, a repair mortar, a masonry mortar, a waterproofing mortar, an anchoring mortar, a render, a screed, a thin joint mortar, a self-levelling underlayment or self-levelling overlayment, or a levelling compound.
